Europäisches Patentamt

(19) **European Patent Office**

Office européen des brevets

(11) Publication number: **0 031 134**
**B1**

# (12) EUROPEAN PATENT SPECIFICATION

(45) Date of publication of patent specification: **18.07.84**

(51) Int. Cl.³: **B 01 D 9/02**

(21) Application number: **80107987.2**

(22) Date of filing: **17.12.80**

(54) Continuously working crystallizer.

(30) Priority: **19.12.79 NL 7909152**

(43) Date of publication of application:
**01.07.81 Bulletin 81/26**

(45) Publication of the grant of the patent:
**18.07.84 Bulletin 84/29**

(84) Designated Contracting States:
**DE FR GB IT NL SE**

(56) References cited:
**DE - C - 268 409**
**FR - A - 799 546**
**GB - A - 9 148**
**US - A - 1 644 161**

(73) Proprietor: **GOUDSCHE MACHINEFABRIEK B.V.**
**Postbus 125**
**NL-2800 AC Gouda (NL)**

(72) Inventor: **Witte, Johan Frederik**
**Nieuwendammersdijk 156**
**NL-1025 LS Amsterdam (NL)**
Inventor: **Horsmans, Jan Willem Louis Marie**
**Kruisweg 949**
**NL-2132 CD Hoofddorp (NL)**

(74) Representative: **Konings, Lucien Marie Cornelis**
**Joseph et al,**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a continuously working crystallizer in the shape of an oblong vessel with at one end a supply and at the other end a discharge for the solution, with a driven horizontal shaft extending longitudinally of the vessel and provided with transversely extending, longitudinally spaced disc-shaped elements each having a peripheral cut-out, one or more cooling chambers being provided, and having means for supplying and discharging a cooling fluid.

Such a crystallizer is known from the Dutch patent specification NL—C—146394. This known crystallizer is in the shape of a trough and between the disc-shaped elements attached to the shaft are arranged cooling bodies which reach till the shaft. The disc-shaped elements leave a large space free between the disc-shaped elements and the wall of the trough. The cooling bodies are placed at a small angle and therefore conveying action is obtained so that the slurry with crystals flows from the one section to the other section. This known device can only restrictively be used in a sense that it works only effective with highly viscous solutions. Only with highly viscous solutions one has the problems with vegetation of crystals on the cooled surfaces. Moreover due to the high viscosity there is no problem of a local back flow of the solution to the preceding section. The tendency to promote the vegetation of crystals on the surfaces is defined by the following factors. The amount of heat withdrawn per unit of the cooling surface, the width of the meta-stable region of the relevant solution, the viscosity of the solution and of the produced slurry of crystals and the roughness of the cooled surfaces. In the case of a high viscosity, one has as a rule a wider meta-stable region, whereas moreover the crystals will settle less quicker, so that it is easier to have a homogeneous distribution of the crystals in the slurry. So it is possible to have a larger cooling capacity per unit of cooling surface. With a low viscosity of the solution, one has as a rule a narrow meta-stable region and the crystals will settle quickly. With such a solution there is a considerably lower cooling capacity per unit of cooling surface possible and per ton of produced crystals it is necessary to install a considerably larger and costly cooling surface. This is the reason that the known crystallizer can practically only be used in such cases, where one has crystallization in highly viscous solutions and where a relatively small amount of heat has to be withdrawn. This is for example the case when one has to aftercool sugar-sirop in a sugar factory.

The backflow in the known device of low viscous liquids to a preceding section has for its result that a departure of the cooling profile occurs so that a product of inferior quality is obtained and that the vegetation of crystals from the cooling surfaces is promoted. This again has for its result that there is a larger resistance to the flow of heat and a smaller heat flux. In the case of a certain heat flux with a low viscous solution in the vicinity of the cooled wall surface and in the case of a slowly moving solution the temperature profile can be such that the meta-stable region is passed so that an undesirable growth of grains occurs and an increased vegetation of crystals on the wall surface will occur. From the above it will be clear that the known crystallizer can not be used in the case of low viscous solutions.

The invention has for its aim to provide a crystallizer as described above which is suited for solutions of low viscosity.

According to the invention the disc-shaped elements over the larger part of their circumference fit with small clearance to surrounding walls and scrapers are provided contacting the exterior of the cooling chambers.

With such a device the cooled surfaces are kept free from crystals adhering to these surfaces and because the scrapers also have the function of stirrers, one has in each section a good mixing so that the crystals are distributed homogeneously and in the case of a certain heat flux a less steep temperature profile in the vicinity of the cooled wall surface is obtained, so that it is prevented that crystals are formed as a result of passing the meta-stable region. Owing to the stirring effect of the scrapers one has moreover a good withdrawal of heat from the solution in each section. The crystallizer according to the invention can also be used for crystallization from a clear liquid in which no crystal seed is present. In the first section the solution is then strongly undercooled so that grain is formed and in the next sections such an amount of heat is withdrawn that the solution stays in the meta-stable region and no new crystals are formed but only the already existing crystals are growing.

According to the invention the vessel can have the shape of a trough and in the trough surrounding walls in form of partitions can have been arranged which with their outer edges fit to the wall of the trough, at the upper edge reach till above the liquid surface and with the inner edge fit with a small clearance to the outer circumference of the disc-shaped elements arranged on the shaft. In such an embodiment the section of the trough has not necessarily to be round and owing to the partitions one has a good separation between the sections enclosed between the disc-shaped elements.

In an advantageous embodiment according to the invention in the spaces between the disc-shaped elements a disc-like cooling chamber is provided, the cooled surfaces of this chamber being directed perpendicular to the shaft and on the shaft scrapers have been attached which touch the cooled surfaces of the cooling chambers with scraper edges directed perpendicular to the shaft. Further according to the invention the cooling chambers preferably have a recess directed in the radial and vertical direction, said recess engaging the shaft. In such an embodiment it is easy to remove the cooling elements and to clean these elements in the case that as a result of operational faults crystals are adhering to the cooling elements.

According to the invention the vessel can have a double wall and the chamber enclosed by the double walls is used as a cooling chamber, said chamber by transverse baffles being divided in sections succeeding to each other in axial direction and the disc-shaped elements are provided with scraper edges extending in axial directions, said scraper edges touching the cooled wall of the vessel. The sections between the disc-shaped elements mounted on the shaft can now be completely free so that only the scrapers are moving in the sections and also are acting as stirrers.

According to the invention the scraper edges of the succeeding disc-shaped elements are preferably displaced in circumferential direction in relation to each other. This has for its result that in each section a stirring action is obtained in different places seen in circumferential direction.

According to the invention the length of the axially directed scraper edges is preferably such, that the scraper edges of the succeeding disc-shaped elements overlap in axial direction. Here one is sure that the whole wall surface is scraped in an efficient way.

According to the invention the peripheral cut-outs in the disc-shaped elements preferably consist of sector-shaped or segment-shaped recesses. This has for its result that only one place of the disc-shaped elements is a passage near the circumference of the vessel, and this passage is displaced continuously along the circumference of the vessel.

According to the invention the succeeding disc-shaped elements are preferably arranged in such a way that the sector-shaped or segment-shaped recesses in circumferential direction are rotated in relation to each other. The risk that a section is short circuited is reduced.

In an efficient embodiment according to the invention the succeeding disc-shaped elements are rotated over 180° in relation to each other. Here it is practically impossible that the liquid from a preceding section is flowing through a section directly to the next section.

The liquid has to cover a relatively long path inside a section and during the flowing along this path the liquid is sufficiently stirred.

According to the invention the double walled vessel can be cylindrical and closed. This makes it possible to handle solutions in the crystallizer which must be held out of contact with the atmosphere.

The invention will be elucidated in the following description of some embodiments shown in the drawing.

In the drawing shows:

Fig. 1 in perspective and partly opened a crystallizer according to the invention.

Fig. 2 a detail of the crystallizer of Fig. 1.

Fig. 3 in perspective and partly opened a crystallizer according to the invention on another embodiment.

Fig. 4 in perspective and partly opened a crystallizer in yet another embodiment.

Fig. 5 a detail of the crystallizer according to the Figs. 3 and 4.

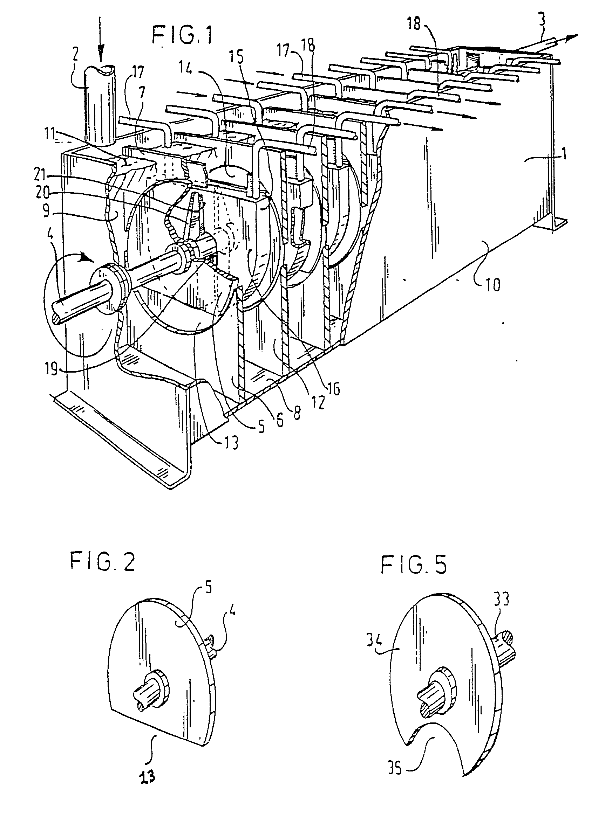

The crystallizer shown in Fig. 1 consists of a rectangular oblong vessel 1 with at its one end a supply 2 for the liquid to be crystallized and at its other end a discharge 3 for the same liquid. Through the vessel extends a shaft 4 which can be rotatably driven in a way not shown. On the shaft 4 are mounted disc-shaped elements 5 which extend transversely in relation to the shaft and which are fixedly attached to the shaft. The disc-shaped elements 5 over the larger part of their circumference fit with small clearance to the surrounding walls, in form of partitions 6 and 7 which are provided with a suitable shaped edge. The partitions 6 fit at the under edge to the bottom 8 and at the side edges to the side walls 9 and 10 of the vessel 1. The partitions 7 fit at the side edges to the side walls 9 and 10 of the vessel 1 and with the upper edge the partitions reach till above the liquid surface 11 supplied by the supply 2. The succeeding disc-shaped elements provided on the shaft 4 enclose together with the fitting partitions 6 and 7 sections 12. The succeeding sections 12 of the vessel 1 are connected by the fact that each disc-shaped element at one side is flattened so that a segment is lacking.

Figure 2 shows clearly the shape of the disc-shaped elements. The passage openings corresponding to the peripheral cut-outs are here indicated with 13, whereas passage opening is indicated with 14 in Fig. 1. The disc-shaped elements are rotated in relation to each other over 180°, so that the peripheral cut-outs 13 and 14 are also displaced over 180° in relation to each other. In each section 12 a disc-like cooling chamber 15 is arranged. This disc-like cooling chamber consists of a flat box with side cooled surfaces 16. The side cooled surfaces 16 are flat and extend transversely on the shaft 4. Each disc-like cooling chamber 15 is provided with the supply 17 and the discharge 18 for the cooling fluid flowing through the cooling chamber. The disc-like cooling chamber 15 has a radially and vertically directed recess 19 with which recess 19 the disc-like cooling chambers 15 engage the shaft 4. This makes it possible to remove and to mount again the disc-like cooling chambers 15 in an easy way. On each side of each disc-like cooling chamber 15 on the shaft are attached scrapers 20 which are provided with scraper edges 21 directed transversely on the shaft 4. These scraper edges 21 touch along the side cooled surfaces 16 of the cooling chambers 15.

The working of the crystallizer is as follows.

When through the supply 2 a solution is supplied and discharged through the discharge 3, a liquid level which is sloping slowly will be set in the succeeding sections 12. The shaft 4 is driven and through the openings 13 and 14 corresponding to the peripheral cut-outs of the disc-shaped elements 5 the solution will flow from the one section to the next section. The peripheral cut-outs 13 and 14 are continuously moved so that no short circuiting can occur. Through the supply 17 cooling fluid is made available to the different disc-like cooling chambers 15 and this fluid is removed through the discharge 18. The cooled surfaces 16 of the disc-like cooling chamber 15 are continuously cleaned of crystals adhering to these cooled surfaces by the scrapers 20, the scraper edges 21 touching the surfaces 16. Moreover the scrapers 20 are efficiently stirring the liquid in each section 12 so that in each section there is a homogeneous temperature. The crystals are homogeneously distributed in the liquid and one has a less steep temperature profile in the vicinity of the cooling wall, so that the meta-stable region of the solution is not surpassed.

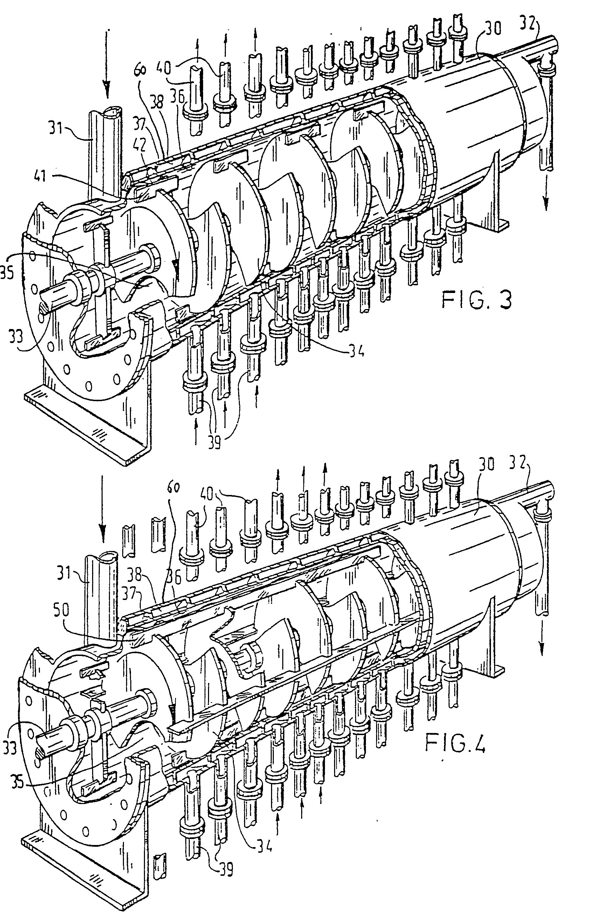

In the embodiment according to Figure 3 the crystallizer is formed by a closed cylindrical vessel 30 that at its one end is provided with a supply 31 and at its other end is provided with discharge 32. Through the vessel 30 extends a shaft 33 with disc-shaped elements 34 which are actually circular discs. The disc-shaped elements 34 show a sector-shaped recess 35. The vessel 30 has an inner wall 36 which lies in some distance from the outer wall 60 so that a hollow compartment between the outer wall of the vessel 30 and the inner wall 36 is formed. Baffles 37 extending in transversal direction in relation to the vessel divide the hollow compartment in several cooling chambers 38, each one being provided with a supply 39 and a discharge 40 for a cooling fluid. The cooling fluid can flow through the chambers 38 in series or parallel. Each disc-shaped element 34 has a scraper 41 with a scraper edge 42 which extends in axial direction and touches along the cooled wall 36. The disc-shaped elements 34 are rotated with the sector-shaped recesses 35 over 180° in relation to each other. The scrapers 41 of each disc-shaped element are lying diametrically opposite the sector-shaped recess 35, such that also the scrapers 41 of the succeeding disc-shaped elements 34 are displaced over 180° in relation to each other.

In axial direction the scrapers of the succeeding disc-shaped elements 34 are overlapping each other so that a part of the wall 36 is scraped twice during each rotation. The scrapers 41 prevent that crystals adhere to the cooling surfaces and moreover the scrapers 41 are stirring well the liquid in each section which is enclosed between two succeeding disc-shaped elements 34.

In the embodiment shown in Fig. 4, scrapers are provided which are displaced over 90° in relation to each other and which extend in axial direction over the full length of the vessel 30. The disc-shaped elements 34 have here scrapers 50 which are common for all disc-shaped elements. Further this embodiment corresponds completely with the embodiment according to Fig. 3.

With reference to the embodiment shown in Fig. 1 it can be remarked that according to the invention also the lower half of the oblong trough shaped vessel can have a half circular section. The circular disc-shaped elements can then fit directly to the bottom of the vessel and the surrounding walls in form of partitions 6 can be omitted.

**Claims**

1. Continuously working crystallizer in the shape of an oblong vessel (1, 30) with at one end a supply (2, 31) and at the other end a discharge (3, 32) for the solution, with a driven horizontal shaft (4, 33) extending longitudinally of the vessel (1, 30) and provided with transversely extending, longitudinally spaced disc-shaped elements (5, 34), each having a peripheral cut-out (13, 14; 35), one or more cooling chambers (15, 38) being provided, and having means for supplying (17, 39) and discharging (18, 40) a cooling fluid, characterized in that the disc-shaped elements (5, 34) over the larger part of their circumference fit with small clearance to surrounding walls (6, 7, 36) and that scrapers (20, 41, 50) are provided contacting the exterior of the cooling chambers (15, 38).

2. Crystallizer according to claim 1, characterized in that the oblong vessel has the shape of a trough (1) and that in the trough (1) surrounding walls in form of partitions (6, 7) have been arranged which with their outer edges fit to the wall (9, 10) of the trough (1), at the upper edge reach till above the liquid surface (11), and with the inner edge fit with a small clearance to the outer circumference of the disc-shaped elements (5) arranged on the shaft (4).

3. Crystallizer according to claim 1 or 2, characterized in that in the spaces between the disc-shaped elements (5) a disc-like cooling chamber (15) is provided, the cooled surfaces (16) of this chamber (15) being directed perpendicular to the shaft (4) and that on the shaft (4) scrapers (20) have been attached, which touch the cooled surfaces (16) of the cooling chambers (15) with scraper edges (21) directed perpendicular to the shaft (4).

4. Crystallizer according to claim 3, characterized in that the cooling chambers (15) have a recess (19) directed in radial and vertical direction, said recess (19) engaging the shaft (4).

5. Crystallizer according to claim 1 or 2, characterized in that the vessel (30) has a double wall (60, 36) and that the compartment enclosed by the two walls (60, 36) is used as a cooling chamber, said compartment being divided by transverse baffles (37) in sections (38) succeeding to each other in axial direction and that the disc-shaped elements (34) are provided with scraper edges (42, 50) extending in axial direction, said scraper edges (42, 50) touching the cooled wall (36) of the vessel (30).

6. Crystallizer according to claim 5, characterized in that the double walled vessel (30) is cylindrical and closed.

7. Crystallizer according to claim 5 or 6, characterized in that the scraper edges (42) of the succeeding disc-shaped elements (34) are displaced in circumferential direction in relation to each other.

8. Crystallizer according to claim 7, characterized in that the length of the axially directed scraper edges (50) is such that the scraper edges (50) of the succeeding disc-shaped elements (34) overlap in axial direction.

9. Crystallizer according to one or more of the preceding claims, characterized in that the peripheral cut-outs in the disc-shaped elements (5, 34) respectively consist of sector-shaped (35) or segment-shaped recesses.

10. Crystallizer according to claim 9, characterized in that the succeeding disc-shaped elements (5, 34) are arranged in such a way that the sector-shaped (35) or segment-shaped recesses in circumferential direction are rotated in relation to each other.

11. Crystallizer according to claim 10, characterized in that the succeeding disc-shaped elements (5, 34) are rotated over 180° in relation to each other.

**Patentansprüche**

1. Kontinuierlich arbeitende Kristallisiereinrichtung in Form eines länglichen Gefäßes (1, 30) mit einer Zuführung (2, 31) an einem Ende und einem Abfluß (3, 32) für die Lösung am anderen Ende, mit einer angetriebenen horizontalen Welle (4, 33), die sich in Längsrichtung des Gefäßes (1, 30) erstreckt und transversal sich erstreckende, in longitudinaler Richtung einen Abstand voneinander aufweisende scheibenförmige Elemente (5, 34), von denen jedes einen peripherisch angeordneten Ausschnitt (13, 14, 35) hat, aufweist, wobei eine oder mehrere Kühlkammern (15, 38) vorgesehen sind und eine Einrichtung zum Liefern (17, 39) und Abgeben (18, 40) eines Kühlfluids, dadurch gekennzeichnet, daß die scheibenförmigen Elemente (5, 34) sich über den größeren Teil ihres Umfangs mit enger Passung den umgebenden Wänden (6, 7, 36) anpassen und daß Kratzer (20, 41, 50) vorgesehen sind, die das Äußere der Kühlkammern (15, 38) berühren.

2. Kristallisiereinrichtung nach Anspruch 1, dadurch gekennzeichnet, daß das längliche Gefäß die Form eines Trogs (1) hat und daß im Trog (1) umgebende Wände in Form von Abteilungen (6, 7) angeordnet wurden, welche mit ihren äußeren Kanten sich der Wand (9, 10) des Trogs (1) anpassen, an der oberen Kante bis über die Flüssigkeitsoberfläche (11) sich erstrecken, und mit der inneren Kante mit enger Passung sich dem äußeren Umfang der scheibenförmigen Elemente (5) anpassen, die auf der Welle (4) angeordnet sind.

3. Kristallisiereinrichtung nach Anspruch 1 oder 2, dadurch gekennzeichnet, daß in den Zwischenräumen zwischen den scheibenförmigen Elementen (5) eine scheibenartige Kühlkammer (15) vorgesehen ist, wobei die gekühlten Oberflächen (16) dieser Kammer (15) perpendikular zur Welle (4) gerichtet sind und daß auf der Welle (4) Kratzer (20) befestigt wurden, welche die gekühlten Flächen (16) der Kühlkammer (15) mit Kratzkanten (21) berühren, die perpendikular zu der Welle (4) gerichtet sind.

4. Kristallisiereinrichtung nach Anspruch 3, dadurch gekennzeichnet, daß die Kühlkammern (15) eine in radiale und vertikale Richtung gerichtete Einbuchtung (19) haben, wobei die Einbuchtung (19) mit der Welle (4) in Eingriff ist.

5. Kristallisiereinrichtung nach Anspruch 1 oder 2, dadurch gekennzeichnet, daß das Gefäß (30) eine doppelte Wand (60, 36) hat, und daß das von den zwei Wänden (60, 36) eingeschlossene Abteil als Kühlkammer benutzt wird, wobei das Abteil durch transversale Scheidewände (37) in Sektionen (38) geteilt ist, die nacheinander in axialer Richtung aufeinanderfolgen, und daß die scheibenförmigen Elemente (34) mit Kratzerkanten (42, 50) versehen sind, die sich in axiale Richtung erstrecken, wobei die Kratzerkanten (42, 50) die gekühlte Wand (36) des Gefäßes (30) berühren.

6. Kristallisiereinrichtung nach Anspruch 5, dadurch gekennzeichnet, daß das doppelwandige Gefäß (30) zylindrisch und geschlossen ist.

7. Kristallisiereinrichtung nach Anspruch 5 oder 6, dadurch gekennzeichnet, daß die Kratzerkanten (42) der aufeinanderfolgenden scheibenförmigen Elemente (34) in Umfangsrichtung gegeneinander versetzt sind.

8. Kristallisiereinrichtung nach Anspruch 7, dadurch gekennzeichnet, daß die Länge der axial ausgerichteten Kratzerkanten (50) so ist, daß die Kratzerkanten (50) der aufeinanderfolgenden scheibenförmigen Elemente (34) sich in axialer Richtung überlappen.

9. Kristallisiereinrichtung nach einem oder mehreren der vorhergehenden Ansprüche, dadurch gekennzeichnet, daß die peripherisch angeordneten Ausschnitte in den scheibenförmigen Elementen (5, 34) jeweils aus sektorförmigen (35) oder segmentförmigen Einbuchtungen bestehen.

10. Kristallisiereinrichtung nach Anspruch 9, dadurch gekennzeichnet, daß die aufeinanderfolgenden scheibenförmigen Elemente (5, 34) so angeordnet sind, daß die sektorförmigen (35) oder segmentförmigen Einbuchtungen in Umfangsrichtung relativ zueinander rotiert sind.

11. Kristallisiereinrichtung nach Anspruch 10, dadurch gekennzeichnet, daß die aufeinanderfolgenden scheibenförmigen Elemente (5, 34) um 180° in Bezug aufeinander rotiert sind.

## Revendications

1. Cristalliseur fonctionnant en continu en forme de récipient allongé (1, 30) muni à une extrémité d'une arrivée (2, 31) et à l'autre extrémité d'une évacuation (3, 32) pour la solution, avec un arbre entraîné horizontal (4, 33) s'étendant longitudinalement dans le récipient (1, 30) et comprenant des éléments en forme de disque (5, 34) s'étentant transversalement et étant longitudinalement espacés, chacun ayant une découpe péripherique (13, 14; 35), une ou plusieurs chambres de refroidissement (15, 38) étant prévues et munies de moyens pour fournir (17, 39) et évacuer (18, 40) un fluide de refroidissement, caractérisé en ce que, sur la plus grande partie de leur circonférence, les éléments en forme de disque (5, 34) s'ajustent, avec un faible jeu, aux parois (6, 7, 36) qui les entourent et que des racleurs (20, 41, 50) sont prévus en contact avec l'extérieur des chambres de refroidissement (15, 38).

2. Cristalliseur suivant la revendication 1, caractérisé en ce que le récipient allongé la forme d'une cuvette (1) et que, dans cette cuvette, sont disposées des parois sous la forme de cloisons (6, 7) qui avec leurs bords extérieurs s'ajustent aux parois (9, 10) de la cuvette (1) avec leur bord supérieur s'étendent jusqu'au dessus de la surface du liquide (11), et avec leur bord intérieur s'ajustent, avec un faible jeu, à la circonférence extérieure des éléments en forme de disque (5) disposés sur l'arbre (4).

3. Cristalliseur suivant la revendication 1 ou 2, caractérisé en ce que, dans les espaces entre les éléments en forme de disque (5) est prévue une chambre de réfrigération (15), les surfaces refroidies (16) de cette chambre (15) étant orientées perpendiculairement à l'arbre (4) et en ce que, des racleurs (20) sont fixés sur l'arbre et sont en contact des surfaces refroidies (16) des chambres de refroidissement (15), les bords racleurs (21) étant dirigés perpendiculairement à l'arbre (4).

4. Cristalliseur suivant la revendication 3, caractérisé en ce que les chambres de refroidissement (15) ont un évidement (19) dirigé dans une direction axiale et verticale, cet évidement (19) recevant l'arbre (4).

5. Cristalliseur suivant la revendication 1 ou 2, caractérisé en ce que le récipient (30) a une double paroi (60, 36) et le compartiment délimité par les deux parois (60, 36) est utilisé comme chambre de refroidissement, ledit compartiment étant divisé par des écrans transversaux (37), en section se suivant l'une l'autre axialement, lesdits bords racleurs (42, 50) touchant la paroi refroidie (36) du récipient (30).

6. Cristalliseur suivant la revendication 5, caractérisé en ce que le récipient à double paroi (30) est cylindrique et fermé.

7. Cristalliseur suivant les revendications 5 ou 6, caractérisé en ce que les bords racleurs (42) des éléments en forme de disque (34) successifs sont décalés dans une direction circonférentielle les uns par rapport aux autres.

8. Cristalliseur suivant la revendication 7, caractérisé en ce que la longueur des bords racleurs dirigés axialement (50) des éléments en forme de disque successifs (34) se chevauchent dans une direction axiale.

9. Cristalliseur suivant une ou plusieurs des revendications précédentes, caractérisé en ce que les découpes périphériques des éléments en forme de disque (5, 34) ont respectivement des formes de secteur (35) ou de segment.

10. Cristalliseur suivant la revendication 9, caractérisé en ce que les éléments en forme de disque (5, 34) sont disposés de telle sorte que les découpes en forme de secteur (35) ou en forme de segment sont décalés dans une direction circonférentielle les unes par rapport aux autres.

11. Cristalliseur suivant la revendication 10, caractérisé en ce que les éléments en forme de disque (5, 34) successifs sont décalés de 180° l'un par rapport à l'autre.

FIG.1

FIG.2

FIG.5

FIG. 3

FIG.4

2